# EUROPÄISCHE PATENTSCHRIFT

(11) **EP 2 917 020 B1**
(45) Veröffentlichungstag und Bekanntmachung des Hinweises auf die Patenterteilung: **02.08.2017**
(21) Anmeldenummer: 13766342.3
(22) Anmeldetag: 25.09.2013
(51) Int. Cl.: B29C 53/56, B29C 53/80, B65H 49/00, B65H 69/06, B29C 70/38, F03D 1/06, B29L 31/08

(54) **VORRICHTUNG UND VERFAHREN ZUM HERSTELLEN VON HALBZEUGEN FUER WINDENERGIEANLAGEN-ROTORBLAETTER**
DEVICE AND METHOD FOR PRODUCING SEMIFINISHED PRODUCTS FOR WIND POWER SYSTEM ROTOR BLADES
DISPOSITIF ET PROCÉDÉ DE FABRICATION DE DEMI-PRODUITS POUR PALES DE ROTOR D'ÉOLIENNE

(30) Priorität: 08.11.2012 DE 102012021802; 15.03.2013 DE 102013204635
(43) Veröffentlichungstag der Anmeldung: 16.09.2015
(73) Patentinhaber: Wobben Properties GmbH, 26607 Aurich (DE)
(72) Erfinder: HOFFMANN, Alexander, 26721 Emden (DE); FRIEDE, Peter, 26624 Suedbrookmerland (DE); GEBERS, Jens, 26632 Ihlow (DE); KNOOP, Frank, 26607 Aurich (DE)
(74) Vertreter: Eisenführ Speiser
(86) Internationale Anmeldenummer: PCT/EP2013/069938
(87) Internationale Veröffentlichungsnummer: WO 2014/072120

(56) Entgegenhaltungen:
- EP-A1- 2 230 070
- EP-A2- 1 757 434
- WO-A1-02/07954
- WO-A1-91/13195
- DE-A1- 3 929 473
- DE-A1-102004 012 349
- JP-A- 2008 155 597
- US-A- 4 246 732
- US-A1- 2003 186 038
- US-A1- 2010 305 269

## Beschreibung

Die vorliegende Erfindung betrifft eine Vorrichtung zur Herstellung von Blattenden für Windenergieanlagen-Rotorblätter, mit einem Wickeldorn, der zum Aufwickeln von vorzugsweise bandförmigem, Faserverbundwerkstoff rotierbar ist.

Grundsätzlich werden im Bereich der Rotorblatttechnologie, und im besonderem Maße im Bereich der Rotorblatttechnologie von Windenergieanlagen, besondere Stabilitätsanforderungen an die nabenseitigen Endstücke von Rotorblättern gestellt, da diese für die Krafteinleitung vom Blatt in die Nabe verantwortlich sind, und besonders hohen statischen wie auch dynamischen Belastungen ausgesetzt sind. Es ist daher von großer Bedeutung, dass die Blattenden von Rotorblättern für Windenergieanlagen mit hoher Fertigungsgenauigkeit und unter Einhaltung hoher Qualitätsstandards herstellbar sind.

Blattenden für die vorgenannten Rotorblätter bestehen häufig aus mehreren Bauteilen, von denen zumindest einige aus Faserverbundwerkstoffen hergestellt sind. Aus dem Stand der Technik bekannt ist das Zusammenfügen mehrerer Formteile aus Faserverbundwerkstoffen in Trockenform. Die so zusammengeführten "trockenen" Faserverbund-Formteile werden bislang üblicherweise gasdicht gegeneinander verschlossen, evakuiert und anschließend in einem sogenannten Vakuum-Injektionsverfahren, oder auch Infusions-Verfahren, mit einem Fluid getränkt (hiernach bezeichnet als "Tränkfluid"). Das Fluid wird nach dem Durchdringen des Faserverbundwerkstoffs ausgehärtet, wodurch der Gesamtstruktur Bindung und Stabilität verliehen wird.

Bei diesem bekannten Verfahren, welches im Allgemeinen zufriedenstellende Ergebnisse liefert, kann es jedoch in bestimmten Einzelfällen dazu kommen, dass das Tränkfluid nicht gleich schnell in verschiedene Strukturbereiche der Formteile aus Faserverbundwerkstoff vordringt. Durch dieses Ausbilden einer ungleichmäßigen Fließfront kann es in Extremfällen dazu kommen, dass der Faserverbundwerkstoff nicht überall in gleicher Weise mit Tränkfluid benetzt wird. An den unzureichend benetzten Stellen kann es dann zu einer geringeren Festigkeit des Bauteils im ausgehärteten Zustand kommen, was das Versagensrisiko erhöht.

Ferner wird es im Stand der Technik als nachteilig mit Blick auf die Fertigungsökonomie empfunden, dass zur Herstellung solcher Kombinationen einzelner Formteile bislang zusätzliche Mittel mit eingelegt oder bereitgestellt werden müssen, die ein Evakuieren und Leiten des Tränkfluids erst ermöglichen, beispielsweise Vakuumfolie und Fluidleitungen.

Zum Ausbilden der Grundstruktur eines Blattendes ist beispielsweise aus DE 10 2010 026 018 A1 eine Wickeltechnik für Rotorblätter einer Windenergieanlage bekannt. Die im Stand der Technik vorgefundenen Nachteile werden aber hier nicht umgesetzt.

Vor dem Hintergrund der vorstehenden Ausführungen lag der vorliegenden Erfindung die Aufgabe zugrunde, eine Vorrichtung zur Herstellung von Blattenden gemäß der Eingangs bezeichneten Art dahingehend zu verbessern, dass die im Stand der Technik vorgefunden Nachteile möglichst weitgehend behoben werden.

Der Erfindung lag somit insbesondere die Aufgabe zugrunde, eine Vorrichtung anzugeben, mit welcher Blattenden mit geringeren Schwankungen in der Festigkeit hergestellt werden können. Der Erfindung lag ferner insbesondere die Aufgabe zugrunde, bei einer Vorrichtung der eingangs genannten Art eine gesteigerte Fertigungsökonomie bereitzustellen.

Die Erfindung löst die ihr zugrunde liegende Aufgabe bei einer Vorrichtung der eingangs genannten Art, indem sie eine an dem Wickeldorn entlang verfahrbare Tränkeinrichtung zum Tränken des Faserverbundwerkstoffs vor dem Aufwickeln um den Wickeldorn herum aufweist, und eine, vorzugsweise synchron mit der Tränkrichtung an dem Wickeldorn entlang verfahrbare Magazineinrichtung zur Bereitstellung des Faserverbundwerkstoffes aufweist.

Der Erfindung liegt die Erkenntnis zugrunde, dass eine bessere Benetzung des Faserverbundwerkstoffes in seiner Gesamtheit mittels eines Tränkvorgangs erzielt werden kann. Dieser Tränkvorgang macht es unnötig, zusätzlich zum Faserverbundwerkstoff für das Blattende noch weitere Strukturelemente, wie beispielsweise Vakuumfolie oder Fluidleitungen, einzubauen.

Die Erfindung macht sich ferner insbesondere zunutze, dass die Tränkeinrichtung und die Magazineinrichtung, welche den Faserverbundwerkstoff bereitstellt, vorzugsweise synchron, an dem rotierbaren Wickeldorn entlangfahren, so dass in einem kontinuierlichen Prozess der Faserverbundwerkstoff auf den Wickeldorn aufgewickelt werden kann und zugleich kurz vor dem Aufwickelvorgang selbst in der Tränkeinrichtung mit Tränkfluid versehen wird. Durch das zeitnahe Aufwickeln im Anschluss an das Tränken wird eine äußerst vorteilhafte gleichmäßige Verteilung des Tränkfluids innerhalb der Faserverbundwerkstoffstruktur erreicht. Als Tränkfluid kommt erfindungsgemäß beispielsweise ein (Kunst-)Harz infrage. Als Faserverbundwerkstoff kommt erfindungsgemäß beispielsweise CFK oder GFK in Betracht.

Dadurch, dass der Wickeldorn stationär rotieren kann, und die im Vergleich zum Wickeldorn deutlich kleineren baulichen Einheiten der Tränkeinrichtung und der Magazineinrichtung am Wickeldorn entlangfahren, wird zudem ein apparativ optimierter Aufbau bereitgestellt.

Die Erfindung wird dadurch weitergebildet, dass die Magazineinrichtung eine Mehrzahl von rotierbar gelagerten Rollenhalterungen zur Aufnahme von Faserverbundwerkstoffrollen aufweist. Von diesen Faserverbundwerkstoffrollen ist vorzugsweise jeweils eine primäre Rolle zum Abrollen von Faserverbundwerkstoff aktiv, wobei der Faserverbundwerkstoff über die Tränkeinrichtung von der Vorrichtung zum Wickeldorn gefördert und durch Rotation des Wickeldorns auf diesen aufgewickelt wird. Bei einem notwendigen Rollenwechsel wird vorzugsweise eine (sekundäre) Rolle betätigt, die zuvor im Stand-By verharrt, bevor die vorherige Rolle vollständig abgerollt ist, um mit möglichst geringem Zeitverzug Faserverbundwerkstoff von der nächsten Rolle in den Förderweg einspeisen und abrollen zu können.

Die jedenfalls Übrigen, nicht aktiven Rollen dienen der Bevorratung von Faserverbundwerkstoff und gewährleisten, dass möglichst geringe Wechselzeiten zum Rollentausch den Wickelvorgang beeinträchtigen. Durch Bereitstellen einer Magazineinrichtung der vorstehend beschriebenen Art können neue, unverbrauchte Faserverbundwerkstoffrollen an die Stelle der zuvor abgerollten Faserverbundwerkstoffrollen eingesetzt werden, ohne die Vorrichtung und den Aufwickelvorgang zu unterbrechen.

In einer bevorzugten Ausführungsform der vorliegenden Erfindung weisen die Rollenhalterungen einen motorischen Antrieb auf. Weiter vorzugsweise weist auch der Wickeldorn einen motorischen Antrieb auf.

Besonders bevorzugt sind der motorische Antrieb der Rollenhalterung und der motorische Antrieb des Wickeldorns, vorzugsweise mittels einer elektronischen Steuereinheit, in Abhängigkeit voneinander betreibbar. Vorzugsweise sind die Antriebskräfte und Abrollgeschwindigkeiten der Rollenhalterungen so gesteuert, dass sie trotz geringer werdendem Rollendurchmesser eine konstante Bandgeschwindigkeit des abgerollten Faserverbundwerkstoffes gewährleisten. Das Gleiche gilt vorzugsweise für den Wickeldorn, der trotz einer Durchmesserzunahme der sukzessiven aufgewickelten Faserverbundwerkstoffschichten eine konstante Bahngeschwindigkeit des aufgerollten bzw. aufgewickelten Faserverbundwerkstoffes einhält.

Vorzugsweise ist die elektronische Steuereinheit, oder ist eine zusätzliche elektronische Steuereinheit, dazu eingerichtet, den Vortrieb der Verfahrbewegung von Tränkeinrichtung und Magazineinrichtung entlang des Wickeldorns entsprechend vorab definierter Vorgaben zu steuern.

Vorzugsweise sind an der erfindungsgemäßen Vorrichtung Messmittel vorgesehen, die zum Erfassen der abgerollten Bahngeschwindigkeit an der Magazineinrichtung und/oder zur Erfassung der Bahngeschwindigkeit des aufgewickelten Faserverbundwerkstoffes an dem Wickeldorn ausgebildet sind. Dies können beispielsweise optische Messmittel sein, die eine Dickenzu- bzw. abnahme an den jeweiligen Rollen messen. In Kombination mit der vom motorischen Antrieb auslesbaren Drehgeschwindigkeit ist so auch die Bahngeschwindigkeit ermittelbar.

In einer weiteren bevorzugten Ausführungsform der Erfindung weist die Magazineinrichtung eine revolverartige Anordnung der Mehrzahl von Rollenhalterungen auf. Dadurch, dass die Magazineinrichtung als Revolver ausgebildet ist, können die einzelnen Rollen in ihren Rollenhalterungen durch Rotation des Magazins in die jeweilige Betriebsposition zum Abrollen gebracht werden. Vorzugsweise sind zwei benachbarte Rollen aktiv, wenn ein Rollenwechsel vorbereitet wird. Vorzugsweise wird hierbei von der als nächstes in Betrieb zu nehmenden Rollenhalterungen ein gewisses Maß an Faserverbundwerkstoff vorgespeist, damit dieser möglichst ohne Zeitverzögerung, gegebenenfalls überlappend mit dem Endabschnitt der vorhergehenden Rolle von der Magazineinrichtung in Richtung der Tränkeinrichtung gefördert werden kann.

Vorzugsweise ist die revolverartige Anordnung rotatorisch gelagert, und besonders motorisch angetrieben. Beispielsweise können die Mehrzahl der Rollenhalterungen sternförmig an aufeinander zu laufenden Armen oder einem Tragring angeordnet sein.

Die Drehbarkeit der revolverartigen Anordnung gewährleistet auch, dass mit besonders geringem Aufwand auf der den aktiven Rollen gegenüberliegenden Seite ein Rollenwechsel vorgenommen werden kann.

Gemäß einer besonders bevorzugten Ausführungsform der Erfindung weist die Vorrichtung eine im Bereich der, vorzugsweise an der, Magazineinrichtung angebrachte, nicht parallel zu der Abrollrichtung der Rollenhalterungen verfahrbare Nähmaschine zum Verbinden eines Abschnitts, insbesondere Endabschnitts, an der ersten Faserverbundwerkstoffrolle, die von einer ersten Rollenhalterung, vorzugsweise vollständig, abgerollt ist, mit einem Abschnitt, vorzugsweise Anfangsabschnitt, einer zweiten Faserverbundwerkstoffrolle, die von einer zweiten Rollenhalterung, vorzugsweise noch nicht vollständig, abgerollt ist. Gemäß dieser Ausführungsform wird im Betrieb mittels der Nähmaschine das Rollenende der verbrauchten Rolle mit dem Anfang der noch nicht verbrauchten Rolle vernäht, so dass die neue Rolle von dem Ende der alten Rolle durch den Wickelvorgang des Wickeldorns mit in den Förderweg in Richtung der Tränkeinrichtung gezogen wird. Ferner ermöglicht die Verwendung der Nähmaschine eine unterbrechungsfreie Ausführung des Rollenwechsels, was sich besonders vorteilhaft auf die Fertigungsökonomie auswirkt. Als Nähmaschine kann beispielsweise eine Industrienähmaschine, bezeichnet auch als Sacknähmaschine, verwendet werden. Ausreichend großer Abstand der Nahtstiche gewährleistet, dass die Durchtränkung mit Tränkfluid nicht unzulässig beeinflusst wird.

In weiteren bevorzugten Ausführungsformen wird anstelle oder zusätzlich zu einer Nähmaschine eine Tackereinrichtung und/oder eine Klebeeinrichtung zum Aneinanderheften der Abschnitte des Faserverbundwerkstoffs bereitgestellt.

Weiter vorzugsweise weist bei der erfindungsgemäßen Vorrichtung in einer bevorzugten Ausführungsform die Tränkeinrichtung eine Mehrzahl Umlenkrollen zur mehrfachen Umlenkung des sich von der Magazineinrichtung zu dem Wickeldorn hin erstreckenden Faserverbundwerkstoffes auf. Vorzugsweise sind die Umlenkrollen in gleichem oder unterschiedlichem Abstand zum Boden eines Tränkbeckens angeordnet. Hierdurch wird der durch die Tränkeinrichtung beförderte Faserverbundwerkstoff mehrfach in unterschiedliche Richtungen gebogen. Dies führt jeweils dazu, dass durch das wechselseitige Dehnen und Stauchen jenseits der neutralen Faser der Faserverbundwerkstoffbahnen eine noch gleichmäßigere Verteilung des Tränkfluids innerhalb des Faserverbundwerkstoffs erreicht wird. Vorzugsweise wird im Betrieb das Tränkbecken derart mit Fluid gefüllt, dass der Faserverbundwerkstoff mehrfach in das Tränkfluid eingetaucht wird.

Gemäß einer weiteren bevorzugten Ausführungsform der Erfindung weist die Tränkeinrichtung eine Mehrzahl Spannrollen auf, welche zum Spannen des Faserverbundwerkstoffes mit diesem in Kontakt bringbar sind, wobei vorzugsweise zwischen zwei benachbarten Umlenkrollen jeweils mindestens eine Spannrolle angeordnet ist. Die Spannrollen sind vorzugsweise dazu ausgebildet, eine Durchhängen oder Durchrutschen des Faserverbundwerkstoffes in der Tränkeinrichtung zu verhindern, um eine möglichst gleichmäßige Durchlaufzeit des Faserverbundwerkstoffes durch die Tränkeinrichtung zu gewährleisten. Hierdurch wird die Gleichmäßigkeit des Auftrags und die Schwankungshöhe im Grad der Durchtränkung verbessert.

Vorzugsweise weisen eine, mehrere oder alle Spannrollen Messmittel zum Erfassen der Rollenspannung auf. Dies können beispielsweise Kraftmesseinrichtungen sein, die die Anpresskraft senkrecht zur Bahnbewegung der Faserverbundwerkstoffe erfassen. Diese Messmittel wirken vorzugsweise mit der elektronischen Steuerung der Vorrichtung, oder einer separaten elektronischen Steuerung und gegebenenfalls Signalausgängen zusammen.

Vorzugsweise weist die Tränkeinrichtung eine Heizung auf, welche dazu ausgebildet ist, die Temperatur des Tränkfluids in einem vorbestimmten Wertebereich zu halten. Die Temperatur des Tränkfluids beeinflusst die Viskosität des Fluids, insbesondere, falls ein Harz oder Kunstharz ausgewählt ist, und wird daher vorzugsweise von der Heizung in einem Temperaturbereich gehalten, in dem die Viskosität eine zuverlässige und möglichst vollständige Durchtränkung des Fluids ermöglicht, gleichzeitig aber nicht so dünnflüssig ist, dass das Fluid einfach durch den Faserverbundwerkstoff hindurchfließt, ohne in ausreichendem Maße von diesem gespeichert zu werden.

Der Wickeldorn der erfindungsgemäßen Vorrichtung ist vorzugsweise zur Aufnahme von Halbzeugen eingerichtet, um welche herum der Faserverbundstoff aufgewickelt wird, vorzugsweise von Holmgurten. Unter Holmgurt werden diejenigen Einlegeteile verstanden, die innen an der Wandung des Wickeldorns anliegen und den Wickeldorn abstützen bzw. versteifen. Es hat sich auch als vorteilhaft herausgestellt, insbesondere mehrteilige Wickeldorne zu verwenden, da diese mit vermindertem logistischem Aufwand von beiden Seiten um den Wickeldorn herum angeordnet werden können.

Die Erfindung betrifft weiterhin ein Verfahren zur Herstellung von Blattenden für Windenergieanlagen-Rotorblätter, insbesondere mittels einer Vorrichtung nach einem der vorstehenden bevorzugten Ausführungsbeispiele. Das erfindungsgemäße Verfahren löst die eingangs mit Bezug auf die erfindungsgemäße Vorrichtung formulierte Aufgabe mit den Schritten: Bereitstellen von Faserverbundwerkstoff auf einer Magazineinrichtung, Fördern des Faserverbundwerkstoffes von der Magazineinrichtung durch eine Tränkeinrichtung hindurch zu einem Wickeldorn, und Aufwickeln des Faserverbundwerkstoffes um den Wickeldorn herum mittels Rotieren des Wickeldorns, vorzugsweise motorisch angetrieben, wobei die Tränkeinrichtung und die Magazineinrichtung während des Aufwickelns an dem Wickeldorn entlang, vorzugsweise synchron zueinander, verfahren.

Das erfindungsgemäße Verfahren macht sich die gleichen Erkenntnisse und Vorteile zunutze wie die erfindungsgemäße Vorrichtung, weswegen diesbezüglich auch auf die vorstehenden Ausführungen verwiesen wird. Am Betrieb der erfindungsgemäßen Vorrichtung bzw. an der Ausführung des erfindungsgemäßen Verfahrens zeigt sich insbesondere auch, dass durch ein, vorzugsweise synchrones, Verfahren der Magazineinrichtung und der Tränkeinrichtung entlang des Wickeldorns eine ökonomische Lösung der zugrunde liegenden Aufgabe erreicht wird. Dadurch, dass beispielsweise die Tränkeinrichtung mit der Magazineinrichtung entlang des Wickeldorns verfahren kann, kann eine sehr viel kleinere Tränkeinrichtung verwendet werden, als wenn die Tränkeinrichtung mit dem Wickeldorn stationär verbliebe, und nur die Magazineinrichtung verfahren würde. Somit wird ein geringeres Volumen an Tränkfluid ausreichen, um den Füllstand in der Tränkeinrichtung auf angemessenem Maß zu halten. Folglich sind auch die Energie- und Kostenaufwendungen zum Heizen des Tränkfluids deutliche geringer als bei stationärer Tränkeinrichtung. Zusätzlich wird der Faserverbundwerkstoff ausschließlich in Abrollrichtung durch die Tränkeinrichtung hindurch bewegt, wenn diese sich synchron mit der Magazineinrichtung mit bewegt, so dass eine "seitliche Anströmung" des Faserverbundwerkstoffes durch Tränkfluid vermieden wird. Damit wird auf beiden Seiten der Faserverbundwerkstoffbahn, also links und rechts in Bezug auf die Abrollrichtung, eine noch gleichmäßigere Durchtränkung verwirklicht.

Das erfindungsgemäße Verfahren wird vorzugsweise dadurch weitergebildet, dass der Faserverbundwerkstoff auf einer Mehrzahl von rotierbar gelagerten Rollenhalterungen bereitgestellt wird, und die Rollenhalterungen beim Befördern derart rotieren, vorzugsweise motorisch angetrieben, dass Faserverbundwerkstoff abgerollt wird. Vorzugsweise weisen der Wickeldorn und die Rollenhalterungen jeweils einen motorischen Antrieb auf, und der motorische Antrieb der Rollenhalterungen und der motorische Antrieb des Wickeldorns werden bei der Ausführung des Verfahrens, vorzugsweise mittels einer elektronischen Steuereinheit, in Abhängigkeit voneinander betrieben. Vorzugsweise ist der Antrieb derart, dass eine von dem Wickeldorn ausgeübte Zugspannung auf den Faserverbundwerkstoff nicht zu groß wird, und das ferner die Abroll- und Aufwickelgeschwindigkeiten, also die Bahngeschwindigkeiten des Faserverbundwerkstoffes an beiden Enden des Förderwegs möglichst wenig voneinander abweichen. Die Bahngeschwindigkeit des abgerollten bzw. aufgewickelten Faserverbundwerkstoffes wird vorzugsweise mittels entsprechender Messmittel erfasst.

Weiter vorzugsweise umfasst das erfindungsgemäße Verfahren die Schritte: Verbinden eines Abschnittes, insbesondere Endabschnittes, einer ersten Faserverbundwerkstoffrolle, die von einer ersten Rollenhalterung, vorzugsweise vollständig, abgerollt ist, mit einem Abschnitt, vorzugsweise Anfangsabschnitt, einer zweiten Faserverbundwerkstoffrolle, die von einer zweiten Rollenhalterung, vorzugsweise noch nicht vollständig, abgerollt ist. Vorzugsweise erfolgt das Verbinden mittels Verfahrens, nicht parallel zur Abrollrichtung der Rollenhalterung, einer Nähmaschine und Vernähen der beiden Abschnitte miteinander.

Weiter vorzugsweise umfasst das erfindungsgemäße Verfahren den Schritt des mehrfachen Umlenkens des sich von der Magazineinrichtung zu dem Wickeldorn hin erstreckenden Faserverbundwerkstoffes. Das Umlenken erfolgt vorzugsweise mittels mehrerer Umlenkrollen in gleichem unterschiedlichem Abstand zum Boden eines Tränkbeckens der Tränkeinrichtung.

Vorzugsweise erfolgt das Spannen des Faserverbundwerkstoffes zwischen zwei benachbarten Umlenkrollen, insbesondere mittels Inkontaktbringens des Faserverbundwerkstoffes mit einer Mehrzahl Spannrollen.

Die Erfindung betrifft ferner ein Verfahren zur Herstellung eines Rotorblatts für eine Windenergieanlage, umfassend ein Verfahren nach einem der vorstehend beschriebenen bevorzugten Ausführungsbeispiele, und ferner umfassend die Schritte:
- Einlegen des gewickelten Faserverbundwerkstoffes in eine Form zum Aushärten,
- Aushärten des Tränkfluids im Anschluss an das Wickeln, so dass ein ausgehärtetes Faserverbundteil entsteht,
- Entfernen des Wickeldorns von dem ausgehärteten Faserverbundteil
- vorzugsweise Verkleiden des ausgehärteten Faserverbundteils mit einer oder mehreren weiteren Laminatschichten, so dass ein Blattende entsteht,
- Verbinden des Blattendes im Anschluss an das Aushärten mit einem oder mehreren Anbauteilen, wie beispielsweise Hinterkantensegmenten, Blattspitzen etc., insbesondere mittels Verschrauben oder Verkleben, zu einem Rotorblatt.

Das Entfernen des Wickeldorns erfolgt vorzugsweise nach dem Aushärten des Tränkfluids. Weiter vorzugsweise wird das ausgehärtetes Faserverbundteil, auch Wickelkörper bezeichnet, nach dem Entfernen des Wickeldorns als Halbzeug in eine Rotorblattform eingelegt, in welcher weitere Rotorblatteile hinzugefügt werden.

Die Erfindung betrifft ferner eine Windenergieanlage, mit einem Turm, einer drehbar an dem Turm gelagerten Gondel, einem drehbar an der Gondel gelagerten Rotor, und einer Mehrzahl an dem Rotor befestigter Rotorblätter, von denen mindestens eines, vorzugsweise mehrere oder sämtliche nach dem vorstehend beschriebenen Verfahren zur Herstellung eines Rotorblatts für eine Windenergieanlage hergestellt worden ist bzw. sind.

Die Erfindung wird im Folgenden unter Bezugnahme auf die beigefügten Figuren anhand eines Ausführungsbeispiels näher beschrieben. Hierbei zeigen
- Figur 1: eine schematische Querschnittsansicht einer Vorrichtung gemäß dem bevorzugten Ausführungsbeispiel.
- Figur 2: eine schematische Querschnittsansicht eines mit der erfindungsgemäßen Vorrichtung gemäß Figur 1 hergestellten Blattendes,
- Figur 3: eine schematische Querschnittsansicht eines Rotorblattes mit einem Blattende gemäß dem bevorzugten Ausführungsbeispiel,
- Figur 4: eine räumliche Darstellung eines Teils der Vorrichtung gemäß Figur 1,
- Figur 5: eine räumliche Darstellung des Teils gemäß Figur 4 in einer anderen Ausrichtung, und
- Figur 6: eine Windenergieanlage mit einem Rotorblatt gemäß der vorliegenden Erfindung.

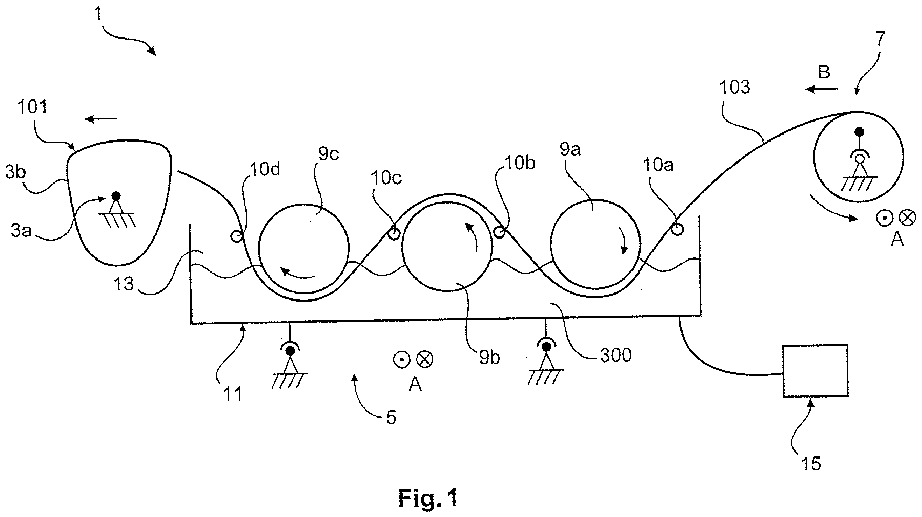

In Figur 1 ist die Vorrichtung zur Herstellung eines Blattendes gemäß dem bevorzugte Ausführungsbeispiel der Erfindung schematisch abgebildet. Die Vorrichtung 1 weist einen Wickeldorn 3a auf, welcher rotatorisch antreibbar ist. An dem Wickeldorn 3a ist ein Wickelgehäuse 3b befestigt, um welchen herum ein Faserverbundwerkstoff 103 in Bahnen aufgewickelt wird. Der Wickeldorn 3a ist stationär angeordnet.

Die Vorrichtung 1 weist ferner eine Tränkeinrichtung 5 auf. Die Tränkeinrichtung 5 weist ein Tränkbecken 13 mit einem Boden 11 auf. Mehrere Umlenkrollen 9a,b,c sind zu dem Boden beabstandet in der Tränkeinrichtung 5 angeordnet. Der Abstand der Umlenkrollen 9a-c zum Boden 11 kann gleich gewählt sein, wie schematisch dargestellt in Figur 1, oder unterschiedlich, je nachdem, was für ein Umschlingungswinkel des Faserverbundwerkstoffs 103 um die Umlenkrollen 9a,b,c herum gewünscht ist. Ferner weist die Tränkeinrichtung 5 eine Mehrzahl Spannrollen 10a,b,c,d auf, welche nichtparallel zur Förderrichtung des Faserverbundwerkstoffes 103 auf diesen durch Inkontaktbringen einwirken, um die Spannkraft in Richtung der Umlenkrollen zu erhöhen oder verringern. Hierdurch kann auch Einfluss auf den Umschlingungswinkel genommen werden. In dem in Figur 1 gezeigten Ausführungsbeispiel bewirken die Spannrollen 10a,b ein Spannen des Faserverbundwerkstoffes 103 in Richtung der Umlenkrolle 9a, während die Spannrollen 10c,d ein Spannen des Faserverbundwerkstoffes 103 in Richtung der Umlenkrolle 9c bewirken. Alternative Gestaltungen können auch vorsehen, dass die Spannrollen 10b,c den Faserverbundwerkstoff 103 in Richtung der Umlenkrolle 9b spannen.

Die Tränkeinrichtung 5 ist bis zu einem vorbestimmten Pegel mit einem Tränkfluid 300 befüllt. Der Pegel des Tränkfluids 300 ist vorzugsweise so gewählt, dass der Faserverbundwerkstoff 103 beim Hindurchfördern durch die Tränkeinrichtung 5 mehrmals in das Tränkfluid 300 eingetaucht wird. Dies wird vorzugsweise dadurch gewährleistet, dass der Faserverbundwerkstoff 103 durch die Umlenkrolle 9b aus dem Fluid herausgehoben wird, und durch die Umlenkrollen 9a,c in das Fluid eingetaucht wird.

Die Tränkeinrichtung 5 ist ferner mittels einer Steuerung 15 in Verbindung mit (nicht dargestellten) Heizmitteln heizbar, derart, dass das in der Tränkeinrichtung 5 bereitgestellte Tränkfluid 300 innerhalb eines vorbestimmten Temperaturbereichs gehalten wird.

Die Tränkeinrichtung 5 ist in Richtung des Pfeils A, also in Figur 1 in die Betrachtungsebene hinein oder aus ihr heraus, verfahrbar, vorzugsweise auf Schienen.

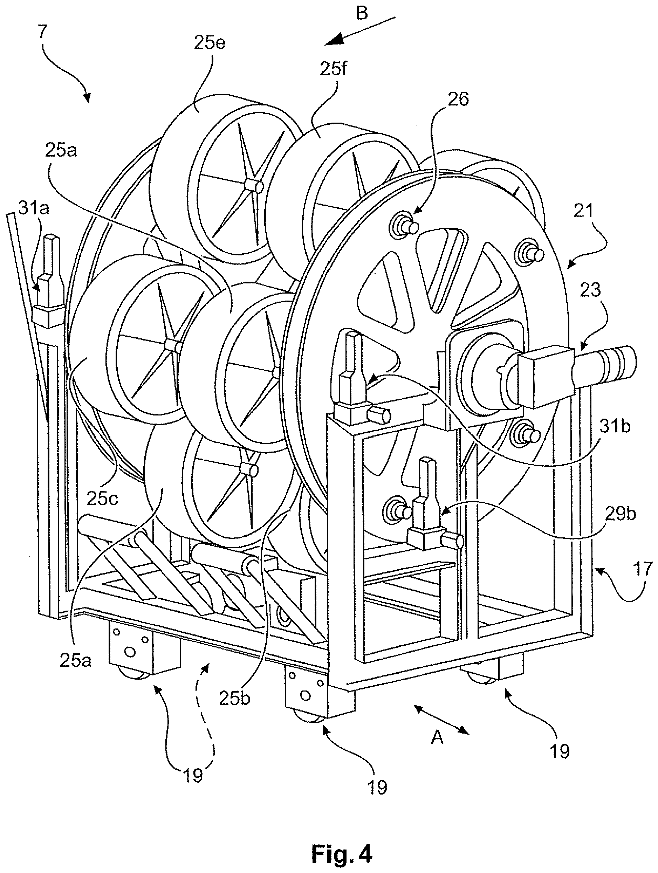

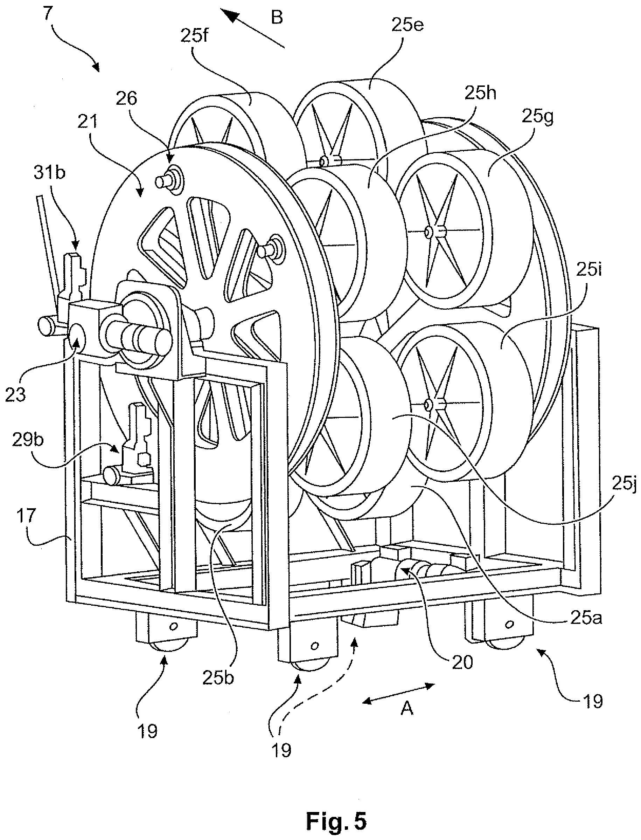

Die Vorrichtung 1 gemäß Figur 1 weist ferner eine Magazineinrichtung 7 auf. Die Magazineinrichtung 7 ist in Figur 1 nur schematisch als einzelne Rolle dargestellt. Wegen einer detaillierteren, bevorzugten Ausführungsform der Magazineinrichtung 7 wird auf die Figuren 4 und 5 verwiesen. Die Magazineinrichtung 7 stellt den Faserverbundwerkstoff 3 bereit. Der Faserverbundwerkstoff wird von der Magazineinrichtung 7 in Richtung des Pfeils B abgerollt. Die Magazineinrichtung 7 ist, vorzugsweise synchron mit der Tränkeinrichtung 5, in Richtung des Pfeils A verfahrbar, vorzugsweise auf Schienen.

Im Betrieb der Vorrichtung 1 wird von der Magazineinrichtung 7 Faserverbundwerkstoff abgerollt in Richtung des Pfeils B, und in die Tränkeinrichtung 5 eingespeist. In der Tränkeinrichtung 5, gespannt durch die Spannrollen 10a-d, der Faserverbundwerkstoff 103 an den Umlenkrollen 9a-c gefördert, wobei der Faserverbundwerkstoff 103 mehrmals, nämlich jeweils zwischen der Umlenkrolle 9a,c und dem Boden 11 des Tränkbeckens 13, in das Tränkfluid 300 eingetaucht wird.

Im Anschluss an das Durchlaufen der Tränkeinrichtung 5 wird der Faserverbundwerkstoff 103 auf das rotierende Wickelgehäuse 3b, das sich um die Drehachse des Wickeldorns 3a herum dreht, aufgewickelt, wodurch auf dem Wickelgehäuse 3b die Struktur des Blattendes 101 abgebildet wird.

Das zunächst noch flüssige Tränkfluid 300 wird nach dem abgeschlossenen Vorgang des Aufwickelns um das Wickelgehäuse 3b herum ausgehärtet. Nach Entfernen des Wickelgehäuses 3b liegt das fertige Blattende 101 vor.

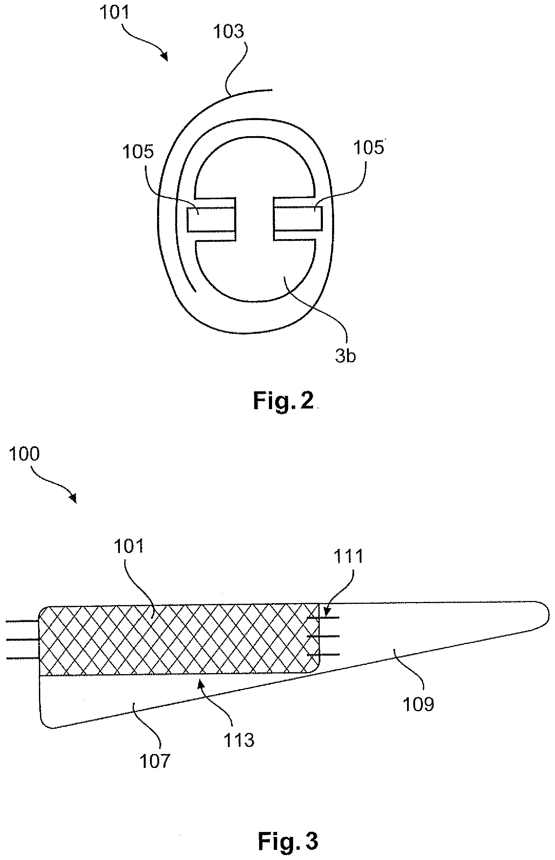

In Figur 2 ist die Struktur des Blattendes 101, und damit auch schematisch der Wickelvorgang, in einer Querschnittsansicht illustriert. Das Wickelgehäuse 3b gemäß Figur 2 ist zur Aufnahme des Faserverbundwerkstoffes 103 eingerichtet, sowie zusätzlich zur Aufnahme von Halbzeugen, gemäß Figur 2 in Form von Holmgurten 105 dargestellt. Die Holmgurte 105 werden mit dem Wickelgehäuse 3b zusammen von dem Faserverbundwerkstoff 103 umwickelt. Die Holmgurte 105 sind vorzugsweise mit Tränkfluid vorimprägniert.

Das Wickelgehäuse 3b, in Figur 2 als einteilig abgebildet, kann alternativ auch mehrteilig ausgebildet sein, was eine Montage am Wickeldorn 3a (Figur 1) erleichtert. Im Betrieb der Vorrichtung 1 gemäß Figur 1 wird vorzugsweise zunächst die Anzahl (Ein- oder Mehrzahl) benötigte Halbzeuge, beispielsweise der Holmgurte 105 am Wickelgehäuse 3b angebracht. Anschließend wird mittels Betrieb der Vorrichtung 1 Faserverbundwerkstoff 103 auf das Wickelgehäuse 3b aufgewickelt. Hierdurch lassen sich die gewünschte Anzahl Schichten durch Variation von Vortrieb der Tränkeinrichtung 5 und Magazineinrichtung 7 relativ vom Wickeldorn 3a und Wickelgehäuse 3b auf das Wickelgehäuse 3b aufbringen, bis die gewünschte Struktur erzeugt ist.

Im Anschluss an diesen Vorgang, sowie im Anschluss an das Aushärten und sonstige Fertigstellen des Blattendes 101 wird das Blattende mit weiteren Komponenten zu einem Rotorblatt zusammengefügt, wie es schematisch in Figur 3 abgebildet ist. Das Rotorblatt 100 gemäß Figur 3 weist nabenseitig das Blattende 101 auf.

Das Blattende als Faserverbundteil nach dem Aushärten bereits im Wesentlichen die Außenkontur des Rotorblatts. Zusätzliche Faserverbundwerkstofflagen können zur Vervollkommnung der Form noch aufgelegt werden, beispielsweise zum Ausbilden des Hinterkantensegmentes.

Das Blattende 101 wird, vorzugsweise mittels Verkleben, an der Schnittstelle 113 mit einem Hinterkantensegment 7 verbunden. Ferner wird das Blattende 101 an der der Nabe gegenüberliegenden Seite mit einer Blattspitze 109 verbunden, vorzugsweise mittels Verschrauben, angedeutet durch Bezugszeichen 111.

Die in Figur 1 schematisch als einzelne Rolle dargestellte Magazineinrichtung 7 ist in den Figuren 4 und 5 detaillierter dargestellt. Die Magazineinrichtung 7 weist ein Rahmengestell 17 auf. Das Rahmengestell ist mittels mehrerer Rollen 19 verfahrbar (in Richtung des Pfeils A), vorzugsweise auf Schienen. Die Rollen 19 sind zumindest teilweise motorisch angetrieben. An dem Rahmengestell 17 ist auf beiden Seiten ein Rad 21 drehbar gelagert angebracht. Die Räder 21 sind mittels einer gemeinsamen Achse gekoppelt. Die Räder 21 sind ferner mittels eines motorischen Antriebs 23 bewegbar.

An den Rädern 21 sind in einer revolverartigen Anordnung eine Mehrzahl Rollenhalterungen 25a-j drehbar gelagert. Die Rollenhalterungen 25a-j weisen jeweils eine Kupplung 26 (nur eine mit Bezugszeichen versehen) auf. Die Kupplung 26 ist mit einem motorischen Antrieb 29b, 31a,b koppelbar, welcher jeweils an dem Rahmengestell 17 angeordnet ist. Rollenhalterungen 25 sind dazu eingerichtet, Faserverbundwerkstoffrollen zu tragen. Hierbei können die Rollenhalterungen abhängig von der Dimensionierung der Faserverbundwerkstoffrollen entweder jeweils einzeln eine Rolle tragen oder jeweils paarweise, wobei am jeweils anderen Rad 21 gegenüberliegende Paare dann jeweils einen Endabschnitt der entsprechenden Faserverbundwerkstoffrolle aufnehmen. Die Rollenhalterungen 25e-j, welche in der in den Figuren 4 und 5 gezeigten Ausrichtung gerade nicht mit einem motorischen Antrieb 29, 31 gekoppelt sind, ermöglichen einen Wechsel der Faserverbundwerkstoffrolle auch bei laufendem Betrieb der motorischen Antriebe 29, 31 zum Abrollen von Faserverbundwerkstoff von den Rollenhalterungen 25a-d.

Wenn sich im Betrieb eine Rolle abgerollt ist, kann durch Abkoppeln der leeren Rolle vom Antriebsmotor, Rotieren der Magazineinrichtung, und Elnkoppeln der nächsten Rolle ein quaasikontinuierllicher Betrieb gewährleistet werden.

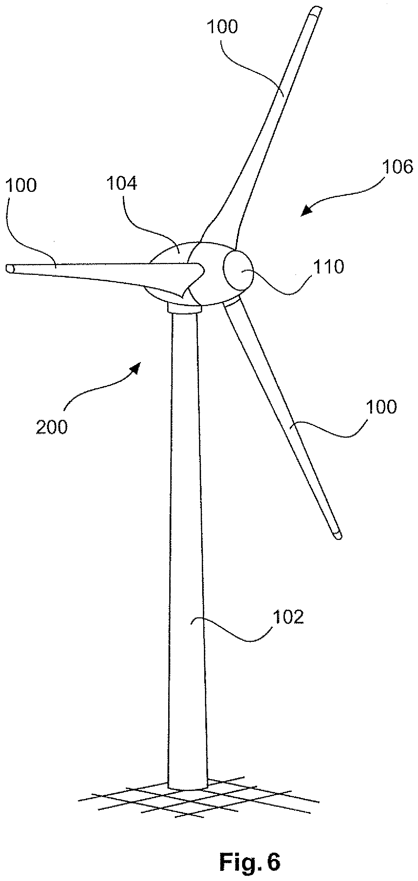

Figur 6 zeigt eine Windenergieanlage 200 mit einem Turm 102 und einer Gondel 104. An der Gondel 104 ist ein Rotor 106 mit drei Rotorblättern 100 nach dem bevorzugten Ausführungsbeispiel und einem Spinner 110 angeordnet. Der Rotor 106 wird im Betrieb durch den Wind in eine Drehbewegung versetzt und treibt dadurch einen Generator in der Gondel 104 an.

## Patentansprüche

1. Vorrichtung (1) zur Herstellung von Blattenden-Halbzeugen (101) für Windenergieanlagen-Rotorblätter (100), mit
- einem Wickeldorn (3a), der zum Aufwickeln von vorzugsweise bandförmigem, Faserverbundwerkstoff rotierbar ist,
**gekennzeichnet durch**
- eine an dem Wickeldorn entlang verfahrbaren Tränkeinrichtung (5) zum Tränken des Faserverbundwerkstoffs vor dem Aufwickeln um den Wickeldorn herum,
- eine, vorzugsweise synchron mit der Tränkeinrichtung, an dem Wickeldorn entlang verfahrbaren Magazineinrichtung (7) zur Bereitstellung des Faserverbundwerkstoffes,
**dadurch gekennzeichnet, dass** die Magazineinrichtung eine Mehrzahl von rotierbar gelagerten Rollenhalterungen (25) zur Aufnahme von Faserverbundwerkstoffrollen aufweist, wobei
die Magazineinrichtung eine revolverartige Anordnung der Mehrzahl von Rollenhalterungen aufweist.

2. Vorrichtung nach Anspruch 1,
**dadurch gekennzeichnet, dass** die Rollenhalterungen einen motorischen Antrieb (29, 31) aufweisen.

3. Vorrichtung nach Anspruch 2,
**dadurch gekennzeichnet, dass** der Wickeldorn einen motorischen Antrieb aufweist, und dass der motorische Antrieb der Rollenhalterungen und der motorische Antrieb des Wickeldorns, vorzugsweise mittels einer elektronischen Steuereinheit, in Abhängigkeit voneinander betreibbar sind.

4. Vorrichtung nach einem der vorstehenden Ansprüche,
wobei die revolverartige Anordnung rotatorisch gelagert ist, und vorzugsweise motorisch angetrieben wird.

5. Vorrichtung nach einem der vorstehenden Ansprüche,
**gekennzeichnet durch** eine im Bereich der, vorzugsweise an der, Magazineinrichtung angebrachte, nichtparallel zur der Abrollrichtung der Rollenhalterungen verfahrbare Nähmaschine zum Verbinden eines Abschnittes, insbesondere Endabschnittes, einer ersten Faserverbundwerkstoffrolle, die von einer ersten Rollenhalterung, vorzugsweise vollständig, abgerollt ist, mit einem Abschnitt, vorzugsweise Anfangsabschnitt, einer zweiten Faserverbundwerkstoffrolle, die von einer zweiten Rollenhalterung, vorzugsweise noch nicht vollständig, abgerollt ist.

6. Vorrichtung nach einem der vorstehenden Ansprüche,
**dadurch gekennzeichnet, dass** die Tränkeinrichtung (5) eine Mehrzahl Umlenkrollen (9) zur mehrfachen Umlenkung des sich von der Magazineinrichtung (7) zu dem Wickeldorn hin erstreckenden Faserverbundwerkstoffes aufweist, die in gleichem oder unterschiedlichem Abstand zum Boden (11) eines Tränkbeckens (13) angeordnet sind.

7. Vorrichtung nach Anspruch 6,
**dadurch gekennzeichnet, dass** die Tränkeinrichtung (5) eine Mehrzahl Spannrollen (10) aufweist, welche zum Spannen des Faserverbundwerkstoffes mit diesem in Kontakt bringbar sind, wobei vorzugsweise zwischen zwei benachbarten Umlenkrollen jeweils mindestens eine Spannrolle angeordnet ist.

8. Vorrichtung nach einem der vorstehenden Ansprüche,
**dadurch gekennzeichnet, dass** der Wickeldorn zur Aufnahme von Halbzeugen (105) eingerichtet ist, um welche herum der Faserverbundwerkstoff aufgewickelt wird.

9. Verfahren zur Herstellung von Blattenden-Halbzeugen für Windenergieanlagen-Ftotorblätter, insbesondere mittels einer Vorrichtung nach einem der vorstehenden Ansprüche, umfassend die Schritte:
- Bereitstellen von Faserverbundwerkstoff mittels einer Magazineinrichtung,
- Fördern des Faserverbundwerkstoffes von der Magazineinrichtung durch eine Tränkeinrichtung hindurch zu einem Wickeldorn, und
- Aufwickeln des Faserverbundwerkstoffes um den Wickeldorn herum mittels Rotieren des Wickels, vorzugsweise motorisch angetrieben, wobei die Tränkeinrichtung und die Magazineinrichtung während des Aufwickelns an dem Wickeldorn entlang, vorzugsweise synchron zueinander, verfahren,
wobei der Faserverbundwerkstoff auf einer Mehrzahl von rotierbar gelagerten Rollenhalterungen in einer revolverartigen Anordnung der Magazineinrichtung bereitgestellt wird, und
die Rollenhalterungen beim Fördern derart rotieren, vorzugsweise motorisch angetrieben, dass Faserverbundwerkstoff abgerollt wird.

10. Verfahren nach Anspruch 9,
wobei der Wickeldorn und die Rollenhalterungen jeweils einen motorischen Antrieb aufweisen, und der motorische Antrieb der Rollenhalterungen und der motorische Antrieb des Wickeldorns, vorzugsweise mittels einer elektronischen Steuereinheit, in Abhängigkeit voneinander betrieben werden.

11. Verfahren nach Anspruch 9 oder 10,
umfassend:
Verbinden eines Abschnittes, insbesondere Endabschnittes, einer ersten Faserverbundwerkstoffrolle, die von einer ersten Rollenhalkerung, vorzugsweise vollständig, abgerollt ist, mit einem Abschnitt, vorzugsweise Anfangsabschnitt, einer zweiten Faserverbundwerkstoffrolle, die von einer zweiten Rollenhalterung, vorzugsweise noch nicht vollständig, abgerollt ist.

12. Verfahren nach einem der Ansprüche 9 bis 11,
umfassend den Schritt des mehrfachen Umlenkens des sich von der Magazineinrichtung zu dem Wickeldorn hin erstreckenden Faserverbundwerkstoffes.

13. Verfahren zur Herstellung eines Rotorblattes für eine Windenergieanlage, umfassend ein Verfahren nach einem der Ansprüche 9 bis 12, und ferner umfassend die Schritte:
- Einlegen des gewickelten Faserverbundwerkstoffes in eine Form zum Aushärten,
- Aushärten des Tränkfluids im Anschluss an das Wickeln, so dass ein ausgehärtetes Faserverbundteil entsteht,
- Entfernen des Wickeldorns von dem ausgehärteten Faserverbundteil
- vorzugsweise Verkleiden des ausgehärteten Faserverbundteils mit einer oder mehreren weiteren Laminatschichten, so dass ein Blattende entsteht.
- Verbinden des Blattendes im Anschluss an das Aushärten mit einem oder mehreren Anbauteilen, wie beispielsweise Hinterkantensegmenten, Blattspitzen etc., insbesondere mittels Verschrauben oder Verkleben, zu einem Rotorblatt.

## Claims

1. Apparatus (1) to produce semi-finished blade end products (101) for wind power installation rotor blades (100) with
- a winding mandrel (3a), which can be rotated for rolling up preferably ribbon-like fiber composite material,
**characterized by**
- an impregnating device (5) that is movable along the winding mandrel to impregnate the fiber composite material before it is rolled up around the winding mandrel,
- a magazine device 7 is movable, preferably synchronously with the impregnating device, along the winding mandrel to provide the fiber composite material,
**characterized in that** the magazine device comprises a plurality of rotatably mounted roll mounts (25) to accept fiber composite material rolls,
wherein the magazine device comprises a revolver-like arrangement of the plurality of roll mounts.

2. Apparatus according to claim 1,
**characterized in that** the roll mounts comprise a motor drive (29, 31).

3. Apparatus according to claim 2,
**characterized in that** the winding mandrel comprises a motor drive, and the motor drive of the roll mounts and the motor drive of the winding mandrelare operated independently , preferably via an electronic control unit.

4. Apparatus according to one of the above claims,
whereby the revolver-like arrangement is rotationally mounted and preferably motor driven.

5. Apparatus according to one of the above claims,
**characterized by** a sewing machine mounted in the area of, preferably on, the magazine device, that is movable non-parallely to the roll-off direction to connect a section, in particular an end section of a first fiber composite material roll which is, preferably completely, rolled off from a first roll mount to a section, preferably a starting section, of a second fiber composite material roll which is, preferably not yet completely, rolled off from a second roll mount.

6. Apparatus according to one of the above claims,
**characterized in that** the impregnating device (5) comprising a plurality of return pulleys (9) for redirecting multiple times the fiber composite material expanding from the magazine device (7) towards the winding mandrel, the pulleys being arranged equidistant or at variety distance to the bottom (11) of an impregnation basin (13).

7. Apparatus according to claim 6,
**characterized in that** the impregnating device (5) comprising a plurality of tension pulleys (10) configured to be brought into contact with the fiber composite material to stretch it, wherein preferably at least one tension pulley is respectively arranged between two neighboring return pulleys.

8. Apparatus according to one of the above claims,
**characterized in that** the winding mandrel is configured to accept semi-finished product (105) around which a composite material is wound.

9. Method to produce semi-finished blade ends for wind power installation rotor blades, in particular through an apparatus according to one of the above claims, comprising the following steps:
- Provision of fiber composite material by means of a magazine device,
- Transporting the fiber composite material from the magazine device through an impregnating device to a winding mandrel, and
- Winding up of the fiber composite material around the winding mandrel by rotating the mandrel, preferably motor-driven, wherein
the impregnating device and the magazine device preferably move synchronously to one another along the winding mandrel,
wherein the fiber composite material is provided on a plurality of rotatably mounted roll mounts in a revolver-like arrangement, and
the roll mounts rotate in such a way when transporting, preferably motor-driven, that fiber composite material is rolled off.

10. Method according to claim 9,
wherein the winding mandrel and the roll mounts each have a motor drive and the motor drive of the roll mounts and of the winding mandrel are operated dependent on one another, preferably through an electronic control unit.

11. Method according to one of the claims 9 or 10,
comprising:
Connection of a section, in particular an end section, of the first fiber composite material roll, which is ,preferably completely, rolled off from a first roll mount to a section, preferably a starting section, of a second fiber composite material roll, which is preferably not yet completely rolled off from a second roll mount.

12. Method according to one of the claims 9 through 11,
comprising the step of several diversions of the fiber composite material which expands from the magazine device to the winding mandrel.

13. Method to manufacture a rotor blade for a wind power installation comprising a method according to one of the claims 9 through 12, and further comprising the steps:
- Insertion of the wound fiber composite material into a form for curing,
- Curing of the impregnating fluid after winding so that a cured fiber composite part is formed,
- Removal of the winding mandrel from the cured fiber composite part
- Preferably covering of the cured fiber composite part with one or several additional laminate layers so that a blade end is formed,
- Connecting of the blade end after curing with one or several attachment parts, such as rear edge segments, blade tips, etc., in particular through screwing or gluing, to a rotor blade.

## Revendications

1. Dispositif (1) servant à fabriquer des produits semi-finis pour extrémités de pale (101) pour des pales de rotor (100) d'éoliennes, comprenant
- un mandrin d'enroulement (3a), qui peut tourner pour enrouler un matériau composite à base de fibres présentant de préférence une forme de bande,
**caractérisé par**
- un système d'imprégnation (5) pouvant être déplacé le long du mandrin d'enroulement, servant à imprégner le matériau composite à base de fibres avant l'enroulement tout autour du mandrin d'enroulement,
- un système de magasin (7) pouvant être déplacé le long du mandrin d'enroulement de préférence de manière synchrone avec le système d'imprégnation, servant à fournir le matériau composite à base de fibres,
**caractérisé en ce que** le système de magasin présente une multitude de supports de rouleaux (25) montés de manière à pouvoir tourner, servant à recevoir des rouleaux de matériau composite à base de fibres, dans lequel
le système de magasin présente un ensemble de type tourelle de la multitude de supports de rouleaux.

2. Dispositif selon la revendication 1,
**caractérisé en ce que** les supports de rouleaux présentent un entraînement (29, 31) motorisé.

3. Dispositif selon la revendication 2,
**caractérisé en ce que** le mandrin d'enroulement présente un entraînement motorisé,
et **en ce que** l'entraînement motorisé des supports de rouleaux et l'entraînement motorisé du mandrin d'enroulement peuvent fonctionner l'un en fonction de l'autre, de préférence au moyen d'une unité de commande électronique.

4. Dispositif selon l'une quelconque des revendications précédentes,
dans lequel l'ensemble de type tourelle est monté de manière rotative et est entraîné de préférence de manière motorisée.

5. Dispositif selon l'une quelconque des revendications précédentes,
**caractérisé par** une machine à coudre installée dans la zone du système de magasin, de préférence au niveau du système de magasin, pouvant être déplacée de manière non parallèle par rapport à la direction de déroulement des supports de rouleaux, servant à relier une section, en particulier une section d'extrémité, d'un premier rouleau de matériau composite à base de fibres, laquelle est déroulée, de préférence en totalité, d'un premier support de rouleaux, à une section, de préférence une section de début, d'un deuxième rouleau de matériau composite à base de fibres, laquelle est déroulée, de préférence pas en totalité encore, d'un deuxième support de rouleaux.

6. Dispositif selon l'une quelconque des revendications précédentes,
**caractérisé en ce que** le système d'imprégnation (5) présente une multitude de rouleaux de renvoi (9) servant à renvoyer à plusieurs reprises le matériau composite à base de fibres s'étendant du système de magasin (7) au mandrin d'enroulement, lesquels sont disposés à une distance identique ou différente du sol (11) d'un bassin d'imprégnation (13).

7. Dispositif selon la revendication 6,
**caractérisé en ce que** le système d'imprégnation (5) présente une multitude de rouleaux de serrage (10), qui peuvent être amenés en contact avec le matériau composite à base de fibres afin de serrer ce dernier, dans lequel respectivement au moins un rouleau de serrage est disposé de préférence entre deux rouleaux de renvoi adjacents.

8. Dispositif selon l'une quelconque des revendications précédentes,
**caractérisé en ce que** le mandrin d'enroulement est mis au point pour recevoir des produits semi-finis (105) autour desquels le matériau composite à base de fibres est enroulé.

9. Procédé servant à fabriquer des produits semi-finis pour extrémités de pale pour des pales de rotor d'éoliennes, en particulier au moyen d'un dispositif selon l'une quelconque des revendications précédentes, comprenant les étapes consistant à :
- fournir du matériau composite à base de fibres au moyen d'un système de magasin ;
- transporter le matériau composite à base de fibres depuis le système de magasin en direction d'un mandrin d'enroulement en passant par un système d'imprégnation ; et
- enrouler le matériau composite à base de fibres tout autour du mandrin d'enroulement au moyen de la rotation de l'enroulement, entraîné de préférence de manière motorisée, dans lequel
le système d'imprégnation et le système de magasin sont déplacés, au cours de l'enroulement, le long du mandrin d'enroulement, de préférence de manière synchrone l'un par rapport à l'autre,
dans lequel le matériau composite à base de fibres est fourni sur une multitude de supports de rouleaux montés de manière rotative dans une disposition de type tourelle du système de magasin, et
les supports de rouleaux tournent, de préférence sont entraînés de manière motorisée, de telle manière que, lors du transport, le matériau composite à base de fibres est déroulé.

10. Procédé selon la revendication 9,
dans lequel le mandrin d'enroulement et les supports de rouleaux présentent respectivement un entraînement motorisé et l'entraînement motorisé des supports de rouleaux et l'entraînement motorisé du mandrin d'enroulement fonctionnent l'un en fonction de l'autre, de préférence au moyen d'une unité de commande électronique.

11. Procédé selon la revendication 9 ou 10, comprenant :
l'étape consistant à relier une section, en particulier une section d'extrémité, d'un premier rouleau de matériau composite à base de fibres, laquelle est déroulée, de préférence en totalité, d'un premier support de rouleaux, à une section, de préférence une section de début, d'un deuxième rouleau de matériau composite à base de fibres, laquelle est déroulée, de préférence pas en totalité encore, d'un deuxième support de rouleaux.

12. Procédé selon l'une quelconque des revendications 9 à 11,
comprenant l'étape consistant à renvoyer à plusieurs reprises le matériau composite à base de fibres s'étendant depuis le système de magasin en direction du mandrin d'enroulement.

13. Procédé servant à fabriquer une pale de rotor pour une éolienne, comprenant un procédé selon l'une quelconque des revendications 9 à 12, et comprenant en outre les étapes consistant à :
- placer le matériau composite à base de fibres enroulé dans un moule aux fins du durcissement ;
- faire durcir le fluide d'imprégnation immédiatement après l'enroulement de manière à obtenir une pièce composite à base de fibres durcie ;
- retirer le mandrin d'enroulement de la pièce composite à base de fibres durcie ;
- de préférence habiller la pièce composite à base de fibres durcie d'une ou de plusieurs autres couches de laminé de manière à obtenir une extrémité de pale ;
- relier l'extrémité de pale immédiatement après le durcissement à une ou à plusieurs pièces rapportées, telles que des segments de bord arrière, des pointes de pale, etc., en particulier au moyen d'un vissage ou d'un collage, pour former une pale de rotor.
